# EUROPÄISCHE PATENTSCHRIFT

(11) **EP 4 220 021 B1**
(45) Veröffentlichungstag und Bekanntmachung des Hinweises auf die Patenterteilung: **06.08.2025**
(21) Anmeldenummer: 23153707.7
(22) Anmeldetag: 27.01.2023
(51) Int. Cl.: F24D 3/16, F28F 1/20, F24D 3/14

(54) **WÄRMELEITBLECH UND VERFAHREN ZUR HERSTELLUNG EINES SOLCHEN**
HEAT CONDUCTING SHEET AND METHOD FOR PRODUCING SAME
DÉFLECTEUR DE CHALEUR ET PROCÉDÉ DE FABRICATION D'UN TEL DÉFLECTEUR

(30) Priorität: 27.01.2022 DE 102022101897
(43) Veröffentlichungstag der Anmeldung: 02.08.2023
(73) Patentinhaber: Schmöle GmbH, 58730 Fröndenberg (DE)
(72) Erfinder: Bitter, Dieter, 57413 Finnentrop (DE)
(74) Vertreter: Roche, von Westernhagen & Ehresmann

(56) Entgegenhaltungen:
- EP-A1- 3 121 520
- EP-A1- 3 786 532
- CH-A- 305 373
- KR-B1- 100 523 690
- US-A- 5 799 723

## Beschreibung

Die vorliegende Erfindung betrifft Wärmeleitbleche zur Festlegung eines Rohrabschnittes an einer Haltefläche eines Wärmetauschers, insbesondere Flächenwärmetauschers.

Flächenwärmetauscher dienen typischerweise zur Klimatisierung von Räumen. Diese weisen eine Haltefläche auf und ein daran angeordnetes Rohrsystem, welches ein erhitztes oder gekühltes Medium entlang der Haltefläche leitet. Das Rohrsystem ist dabei mit Hilfe eines Wärmeleitbleches, welches das Rohrsystem beispielsweise übergreifen kann, an der Haltefläche festgelegt.

Die Haltefläche kann beispielsweise von einer Stirnfläche einer Haltekassette bereitgestellt werden oder alternativ auch von einer Trägerplatte, welche in eine Haltekassette eingebracht wird.

Obwohl ein derartiger Flächenwärmetauscher insbesondere der Temperaturregelung eines Raumes dient, bestehen an diesen auch Ansprüche in akustischer Hinsicht: So ist es hinlänglich bekannt, dass entsprechende Haltekassetten mit einer (Akustik)-Lochung versehen werden. Dies ermöglicht eine optimierte akustische Wirkung des Flächenwärmetauschers, da beispielsweise Schallwellen teilweise in diesen eintreten und somit jedenfalls teilweise absorbiert werden können.

Ist in der Haltekassette eine Trägerplatte vorgesehen, ist diese typischerweise kongruent gelocht.

Um die akustischen Eigenschaften eines derartigen Wärmetauschers zu verbessern, ist es aus druckschriftlich nicht belegbarem Stand der Technik bekannt, auch das Wärmeleitblech zu lochen bzw. mit Perforationen zu versehen.

Hierdurch werden die in die Haltekassette eintretenden Schallwellen im Bereich des Wärmeleitbleches nicht zwingend zurückgeworfen, sondern jedenfalls teilweise absorbiert.

Während die akustischen Eigenschaften eines entsprechenden Wärmetauschers somit tatsächlich verbessert werden können, leiden jedoch typischerweise die Wärmeleiteigenschaften des gesamten Wärmetauschers.

Aus dem Stand der Technik sind bereits Wärmetauscher mit Wärmeleitblechen oder -platten bekannt, welche seitliche Randausnehmungen aufweisen, so z. B. aus der US 5 799 723 A, der EP 3 121 520 A1 oder der CH 305 373 A. Die KR 100 523 690 B1 weist außerdem flügelartige Aufsätze für Kunststoffrohre bei Fußbodenheizungen auf, welche spanlose Ausnehmungen aufweisen.

Aufgabe der Erfindung ist es daher, ein Wärmeleitblech für einen Wärmetauscher bereitzustellen, welches optimierte akustische Eigenschaften eines Wärmetauschers ermöglicht, ohne dass hiermit eine signifikante Verschlechterung der Wärmeleiteigenschaften einhergeht.

Die vorliegende Erfindung löst diese Aufgabe gemäß einem ersten Aspekt mit den Merkmalen des Patentanspruches 1 und demnach dadurch gekennzeichnet, dass die Perforationen, unter der Ausbildung von Fingern des Wärmeleitblechs, als nach außen offene Randausnehmungen ausgebildet sind, wobei oberhalb der Ausnehmungen, insbesondere zwischen den Fingern, hochgestellte Zwischenfinger des Wärmeleitblechs angeordnet sind.

Die Idee dieses ersten Aspektes liegt somit mit anderen Worten darin, dass Perforationen im Randbereich des Wärmeleitbleches (bezogen auf die Längsachse, welche entlang dem kooperierenden Rohrabschnitt ausgerichtet ist) angeordnet sind, bzw. dass die Perforationen sich auf die Seitenbereiche des Wärmeleitbleches konzentrieren, insbesondere dort anzahl- und/oder flächenmäßig einen größeren Anteil einnehmen als in einem gleich großen zentralen Abschnitt des Wärmeleitbleches.

Die Perforationen sind dabei erfindungsgemäß nicht gleichmäßig über die gesamte Oberfläche des Wärmeleitbleches verteilt, was insbesondere bedeutet, dass Bereiche bestehen, in welchen mehr Perforationen und/oder größere Perforationen vorliegen als in anderen Bereichen. Beispielsweise sind Akustiklochungen für Haltekassetten von Wärmetauschern in der Regel gleichmäßig über dessen gesamte Oberfläche verteilt. Sie bilden somit ein homogenes, sich über die gesamte Oberfläche der Haltekassette nicht änderndes, gleichmäßiges Raster aus.

Die erfindungsgemäßen Perforationen ermöglichen jedoch durch ihre ungleichmäßige Anordnung eine bessere grundsätzliche Wärmeleitung:
So können beispielsweise in Bereichen, in denen das Wärmeleitblech an dem Rohrabschnitt anliegt, keine oder im Vergleich zu den anderen Bereichen weniger (oder kleinere) Perforationen vorgesehen werden, da Perforationen in diesem Bereich, im akustischen Sinne, ohnehin nichts oder kaum etwas bringen. Mithin sind die Rohrabschnitte ja gerade nicht perforiert oder gelocht ausgebildet, da sie ein Wärmemedium zu leiten haben, und es bringt demnach keinen Vorteil, in den Bereichen, in denen diese Rohrabschnitte an dem Wärmeleitblech anliegen, eine normale Perforationskonfiguration des Wärmeleitbleches vorzusehen. Mit anderen Worten würden diese Perforationen durch den Rohrabschnitt ohnehin inaktiv geschaltet.

Weist das Wärmeleitblech in diesem Bereich jedoch weniger oder kleinere oder gar keine Perforationen auf, so erhöhen sich die Wärmeleiteigenschaften des gesamten Wärmetauschers, wobei der sich im Kontaktbereich zwischen Wärmeleitblech und Rohrabschnitt übertragende Temperaturunterschied besser (auf die Haltefläche) weitergegeben werden kann.

Eine nicht gleichmäßige Anordnung der Perforationen kann insbesondere darin bestehen, dass die Perforationen im Wesentlichen oder ausschließlich den Randbereichen des Wärmeleitbleches zugeordnet sind, während dem Zentralabschnitt keine oder kaum Perforationen zugeordnet sind. Bei dem Zentralabschnitt kann es sich insbesondere um den Bereich handeln, welcher den Rohrabschnitt kontaktiert und/oder mit diesem zusammenwirkt. Mithin können sich besagte Seitenabschnitte des Wärmeleitbleches seitlich zur Längsachse des Rohrabschnittes befinden.

Unter Perforationen (welche zusammen eine Perforierung ausbilden) werden hierbei insbesondere Durchlochungen von flachen Gegenständen, insbesondere Blechen, verstanden. Eine Akustiklochung (beispielsweise eines Wärmeleitbleches) ist in diesem Sinne demnach eine Perforierung und besteht aus Perforationen.

Die Durchlochungen sind als nach außen offene Randausnehmungen ausgebildet.

Bei den Perforationen handelt es sich mithin um nach außen offene Öffnungen im Material des Wärmeleitbleches. Nach außen offene Randausnehmungen oder Öffnungen springen somit insbesondere hinter die Außenkontur eines Rohlings des Wärmeleitbleches zurück, welche Außenkontur typischerweise von Geraden gebildet wird.

Die Perforationen können dabei jede geeignete Form aufweisen, beispielsweise rechteckig oder rund sein.

Die Perforationen können bevorzugt sämtlich dieselbe Form aufweisen oder alternativ unterschiedliche Formen.

Die Perforationen werden insbesondere in einem Trennverfahren aus einem Wärmeleitblech des Rohlings herausgearbeitet.

Es kann grundsätzlich ein spanabhebendes Verfahren gewählt werden, alternativ ein spanloses Verfahren.

Vorteilhafterweise können mehrere Wärmeleitbleche aus einem Rohling verschnittlos herausgearbeitet werden (beispielsweise wenn nebeneinanderliegende Wärmeleitbleche ineinander greifende Zähne aufweisen oder ähnliches).

Es gibt aber auch noch weitere Ausführungsmöglichkeiten für ein spanloses Verfahren:
So können die Perforationen insbesondere materialerhaltend ausgebildet werden in dem Sinne, dass Material zwar aus der Blechebene ausgelenkt wird, aber grundsätzlich am Blech verbleibt (beispielsweise im Sinne von Klappen- oder Raspellochungen oder Jalousielochungen, also Lochungen, bei denen zur Erzielung einer Öffnung Material durch die (aufgerissene) Blechebene durchgedrückt, aber nicht abgetrennt wird).

In diesem Sinne hat sich ein Verfahren als besonders vorteilhaft herausgestellt, bei dem zur Herausarbeitung der Perforationen (Seiten-) Einschneidungen vorgenommen werden, so dass mehrere nebeneinander liegende Zungen entstehen. Einige dieser Zungen, insbesondere jede zweite dieser Zungen, kann/können dann hochgestellt werden (beispielsweise abgeknickt oder abgekantet oder ähnliches).

Auch hierbei handelt es sich um ein spanloses Verfahren.

Typischerweise werden die Perforationen aus dem Material herausgestanzt oder -genibbelt.

Die Perforationen sollen erfindungsgemäß nicht gleichmäßig über die gesamte Oberfläche des Wärmeleitbleches verteilt sein, wobei in diesem Sinne als Oberfläche bei einem Wärmeleitblech insbesondere der Bereich innerhalb der Außenkontur eines herkömmlichen Wärmeleitbleches bzw. eines entsprechenden Rohlings gemeint ist. Diese gesamte Oberfläche ist typischerweise rechteckig ausgebildet.

Die Perforationen können beispielsweise grundsätzlich symmetrisch angeordnet aber trotzdem "nicht gleichmäßig" über die gesamte Oberfläche des Wärmeleitbleches verteilt sein. Beispielsweise können die Perforationen lediglich in einem oder mehreren Randbereichen (dort jedoch regelmäßig bzw. gleichmäßig) vorgesehen sein, so dass sie insgesamt doch nicht gleichmäßig über die "gesamte" Oberfläche des Wärmeleitbleches verteilt sind.

Das Wärmeleitblech besteht vorzugsweise aus Aluminium oder Aluminiumlegierung(en), insbesondere nicht aus Weichaluminium.

Das Wärmeleitblech kann aber auch aus jedem anderen geeigneten Material, typischerweise Metall, bestehen.

Das Wärmeleitblech wird gemäß seinem Namen aus einem Blech hergestellt, also einem Walzwerkserzeugnis aus Metall, das (zunächst) als Tafel ausgebildet ist.

Es kann sich insbesondere um ein Feinblech handeln von einer Dicke dünner als 3 mm.

Alternativ kann es sich um ein Mittelblech handeln in einer Dicke von zwischen 3 mm und 4,75 mm.

Alternativ kann es sich auch um ein Grobblech handeln mit einer Dicke von etwas mehr als 4,75 mm.

Bevorzugterweise weist das Blech also eine Dicke von weniger als 5 mm auf, weiter bevorzugterweise von weniger als 3,5 mm, weiter bevorzugterweise von weniger als 3 mm.

Gemäß einer besonders vorteilhaften Ausgestaltung der Erfindung ist das (Wärmeleit-)Blech, insbesondere beidseitig, lackiert ausgebildet.

Bei der Lackierung kann es sich beispielsweise um eine Bandlackierung handeln oder um eine gepulverte Oberfläche.

Eine lackierte (bzw. gepulverte) Oberfläche fördert hierbei die Wärmestrahlungseigenschaften des Wärmeleitbleches.

Eine beidseitige Lackierung kann in diesem Sinne insbesondere vorteilhaft sein, sofern das Wärmeleitblech hochgestellte Finger umfasst bzw. oberhalb von Randausnehmungen angeordnete Zwischenfinger, da diese auf diese Weise auch von ihrer hochgestellten Unterseite her bezüglich ihrer Wärmestrahlungseigenschaften verbessert werden.

Ein erfindungsgemäßes Wärmeleitblech dient insbesondere der Festlegung eines Rohrabschnittes an einer Haltefläche eines Wärmetauschers.

Der Rohrabschnitt kann an der Haltefläche dabei mittelbar oder unmittelbar anliegen.

Insbesondere kann der Haltefläche beispielsweise ein Vlies zugeordnet sein, welches zwischen dem Rohrabschnitt und der Haltefläche angeordnet ist.

Ein derartiges Vlies ist auf der Haltefläche insbesondere unverlierbar befestigt - beispielsweise mit Hilfe von (Heißschmelz-)Kleber.

Ein derartiges Vlies kann auch "Akustik-Vlies" genannt werden. Hierbei handelt es sich um ein Gewebe oder ein ähnliches Material, welches die akustischen Eigenschaften des Wärmetauschers noch verbessern kann.

Obwohl ein (Akustik-)Vlies typischerweise die Akustiklochung der Haltefläche verdeckt bzw. abdeckt, hat dies keinen negativen Einfluss auf die akustischen Eigenschaften des Wärmetauschers (sondern hingegen eher positive Eigenschaften, insbesondere im Hinblick auf die Absorptionen oberhalb der Haltefläche).

Weist der Wärmetauscher ein entsprechendes Vlies auf, so kann die Kombination aus Wärmeleitblech und Rohrabschnitt vorzugsweise mit Hilfe eines Viskos- oder Flüssigklebers an der Haltefläche (also mittelbar über das Vlies) befestigt werden. In diesem Fall besteht nämlich der Vorteil, dass der Kleber in den Vlies eintreten kann und einerseits die Verbindung zwischen Vlies und Haltefläche verbessert und/oder andererseits die Wärmeleiteigenschaften des Vlies verbessert (insbesondere da die Hohlräume im Vlies gefüllt werden).

Bevorzugterweise kann das Wärmeleitblech den Rohrabschnitt relativ zur Haltefläche übergreifen.

Mit anderen Worten wird der Rohrabschnitt zwischen Haltefläche und Wärmeleitblech "gesandwicht".

Doch auch anders konfigurierte Wärmeleitbleche sind grundsätzlich von der Erfindung umfasst: So gibt es Wärmeleitbleche, welche zwischen dem Rohrabschnitt und der Haltefläche angeordnet werden. Beispielsweise kann der Rohrabschnitt auf einer Seite des Wärmeleitbleches befestigt, insbesondere verschweißt sein, und das Wärmeleitblech ist mit seiner anderen Seite an der Haltefläche angebracht. Auch derartige Wärmeleitbleche sind grundsätzlich von der Erfindung umfasst.

Die Wärmeleitbleche weisen typischerweise zwei Seitenbereiche oder Flügelbereiche auf, mit welchen sie die Haltefläche kontaktieren, während ein zentraler Abschnitt den Rohrabschnitt übergreift. Selbstverständlich sind auch Wärmeleitbleche bekannt, bei denen lediglich in derartiger Seitenabschnitt oder Flügelabschnitt vorhanden ist und der Rohrabschnitt seitlich in das Wärmeleitblech einclipsbar ist. Auch derartige Konfigurationen sollen von der Erfindung umfasst sein.

Bei der Haltefläche kann es sich beispielsweise um die innere Stirn-oder Hauptfläche einer Haltekassette handeln, oder um eine von einer ersten Seite einer Trägerplatte bereitgestellte Fläche, wobei die Trägerplatte anschließend als Wärmetauscher oder zur Herstellung eines Wärmetauschers verbaut wird. Beispielsweise kann die Trägerplatte in eine Haltekassette eingebracht werden oder an einer Decke oder Wand verputzt werden oder ähnliches. Ein Vlies kann gegebenenfalls - je nach Anforderung - an besagter Fläche der Haltekassette und/oder an der Trägerplatte angeordnet sein.

Bei einem derartigen Wärmetauscher handelt es sich insbesondere um einen Flächenwärmetauscher. Ein solcher Flächenwärmetauscher kann insbesondere dem Decken- oder Bodenbereich eines Raumes zugeordnet sein, um diesen zu klimatisieren.

Die vom Wärmeleitblech festgelegten Rohrabschnitte können insbesondere aus Kupfer oder einem anderen geeigneten Metall, wie beispielsweise Edelstahl, Aluminium, Titan oder ähnlichem bestehen.

Sie können einen geeigneten Querschnitt aufweisen, beispielsweise einen D-förmigen Querschnitt, wie er für die Anmelderin typisch ist, oder einen runden oder eckigen Querschnitt.

Die Rohrabschnitte können dabei insbesondere Bestandteil eines Rohrmäanders oder eines andersartigen Rohrkörpers wie einer Rohrharfe sein.

Die von dem Wärmeleitblech übergriffenen Rohrabschnitte sind üblicherweise gerade ausgebildet. Das Wärmeleitblech weist in Aufsicht daher typischerweise auch eine im Wesentliche rechteckige Hüllkontur auf (die Perforationen können hinter diese Hüllkontur zurückspringen).

Gemäß einer besonders vorteilhaften Ausgestaltung der Erfindung weist das Wärmeleitblech einen Zentralabschnitt auf und mindestens einen Seitenabschnitt.

Wie oben bereits dargelegt, erstreckt sich der Zentralabschnitt im Wesentlichen über den Bereich des Wärmeleitbleches, welcher mit dem Rohrabschnitt zusammenwirkt, diesen insbesondere übergreift und/oder kontaktiert.

Der Zentralabschnitt kann insbesondere mit einer Sicke versehen sein, so dass der Rohrabschnitt formschlüssig oder annähernd formschlüssig übergreifbar ist bzw. an dem Wärmeleitblech anliegen bzw. verpressbar oder von diesem übergriffen werden kann.

Die Sicke weist dabei vorzugsweise eine abgerundete Querschnittsform auf und der Rohrabschnitt ist im Bereich, in welchem er mit dem Wärmeleitblech zusammenwirkt, typischerweise ebenfalls abgerundet ausgebildet (bei einer D-Form des Rohrabschnittes kann die flache Seite dann auf der Haltefläche aufliegen).

In Bezug auf die Längsachse des Rohrabschnittes (und somit auch des gesamten Wärmeleitbleches) kann der Seitenabschnitt insbesondere neben oder parallel zum Rohrabschnitt angeordnet sein. Es kann sich mithin um einen Randabschnitt des Wärmeleitbleches handeln.

Typischerweise weist ein Wärmeleitblech zwei Seitenabschnitte auf, jeweils einen auf jeder Seite des Zentralabschnittes (bzw. des Rohrabschnittes).

Die Seitenabschnitte können daher auch als Flügel bezeichnet werden.

Es sind jedoch auch Konfigurationen mit lediglich einem Seitenabschnitt vorstellbar, beispielsweise die oben bereits erwähnte Variante, bei welcher der Rohrabschnitt seitlich in das Wärmeleitblech einclipsbar ist.

Während der Zentralabschnitt insbesondere dazu dient, den Rohrabschnitt zu übergreifen oder diesen zumindest kontaktiert, um ihn an der Haltefläche festzulegen, dienen die Seitenabschnitte insbesondere dazu, eine gute Wärmeübertragung zwischen dem Wärmeleitblech und der Haltefläche zu ermöglichen. Hierzu liegen die Seitenabschnitte im montierten Zustand insbesondere an der Haltefläche an.

Gemäß der bevorzugtesten Ausführungsform der Erfindung ist vorgesehen, dass der Seitenabschnitt bzw. die Seitenabschnitte (sofern es zwei gibt, was wohl in der Mehrheit der Fälle zutrifft) pro Flächeneinheit mehr Perforationen aufweist als der Zentralabschnitt. In diesem Sinne soll also mindestens einer der Seitenabschnitte (bevorzugt jeweils beide), pro Flächeneinheit, mehr Perforation aufweisen als der Zentralabschnitt.

Die dieser Ausgestaltung zugrundeliegende Idee liegt dabei darin, dass dem Zentralabschnitt typischerweise der Rohrabschnitt zugeordnet ist, welcher naturgemäß schallundurchlässig sein muss. In diesem Bereich Löcher oder Perforationen anzuordnen, macht daher wenig Sinn und die Anmelderin ist zu der Idee gelangt, im Seitenabschnitt mehr Perforationen vorzusehen als im Zentralabschnitt.

Mit anderen Worten kann der Seitenabschnitt durch eine Kennzahl wie "m Perforationen/cm²" beschrieben werden, wobei der Zentralabschnitt "n Perforationen/cm²" aufweist, mit m > n.

Alternativ kann vorgesehen sein, dass der Seitenabschnitt, pro Flächeneinheit, eine perforierte Fläche aufweist, welche größer ist als die perforierte Fläche des Zentralabschnittes pro (identischer) Flächeneinheit.

Gemäß einer besonders vorteilhaften Ausgestaltung sind die Perforationen im Wesentlichen in dem oder in den Seitenbereich(en) ausgebildet. Im Wesentlichen heißt hierbei, dass der Großteil der Perforationen sich in dem oder den Seitenbereich(en) befindet. Insbesondere sind die Perforationen vollständig in dem oder den Seitenbereich(en) angeordnet. Mithin bedeutet der letztgenannte Sonderfall, dass der Zentralabschnitt keine Perforation aufweist.

Vorzugsweise sind die Perforationen innerhalb einer Hüllkontur des Wärmeleitbleches angeordnet. Dies soll verdeutlichen, dass auch beispielsweise nach außen offene Randausnehmungen als Perforationen zu verstehen sind.

Die Hüllkontur des Wärmeleitbleches wird dabei typischerweise von Geraden gebildet, welche die Quererstreckung des Wärmeleitbleches begrenzen.

Demnach besteht eine besondere Ausgestaltung der Erfindung auch darin, dass die Perforationen zumindest teilweise als nach außen offene Randausnehmungen ausgebildet sind.

"Jedenfalls teilweise" bedeutet dabei, dass zumindest ein Teil der Perforationen als nach außen offene Randausnehmungen ausgebildet ist, wobei der Rest als vom Wärmeleitblechmaterial umschlossene Öffnungen ausgebildet sein kann.

In einer besonders bevorzugten Ausführungsform sind sämtliche Perforationen als nach außen offene Randausnehmungen ausgebildet.

Diese können insbesondere einen rechteckigen Querschnitt aufweisen und/oder zwischen sich (vorzugsweise rechteckige) Zungen ausbilden.

Gemäß einer besonders vorteilhaften Ausgestaltung der Erfindung weist das Wärmeleitblech zwei Seitenabschnitte auf, welche, jedenfalls im unverbauten Zustand, in einem Anstellwinkel zueinander angeordnet sind.

In einer herkömmlichen Ausgestaltung liegen die Seitenabschnitte typischerweise in einer Ebene, so dass zwischen ihnen kein Anstellwinkel ausgebildet wird. Gemäß dieser bevorzugten Form jedoch ist ein Anstellwinkel vorgesehen, insbesondere im Bereich von zwischen 0 und 90°.

Die Anstellrichtung kann hierbei insbesondere derart gewählt werden, dass sich der Öffnungswinkel zur zwischen den Seitenabschnitten befindlichen Sicke auf weniger als 180° verkleinert.

Mit anderen Worten werden die Seitenabschnitte hin zur späteren Montagerichtung verformt.

Diese Ausgestaltung ermöglicht bei einer späteren Montage an einer Haltefläche eine gewisse Vorspannung der Seitenabschnitte auf die Haltefläche zu. Diese Ausführungsform ermöglicht dabei ein sicheres Anliegen der Seitenabschnitte an der Seitenfläche, und somit wird ein ungewolltes Abstehen der Seitenabschnitte von der Haltefläche verhindert, was anderenfalls zu einem Leistungsverlust des Wärmetauschers führen könnte.

Gemäß einer besonders vorteilhaften Ausgestaltung der Erfindung weist das Wärmeleitblech Haltemittel zum Anbringen an der Haltefläche auf.

Je nach Auslegung können diese Haltemittel als Teil des Wärmeleitbleches und/oder als Teil des Wärmetauschers aufgefasst werden.

Die Haltemittel sorgen jedenfalls für eine sichere Festlegung von Wärmeleitblech (und Rohrabschnitt) an der Haltefläche des Wärmetauschers.

Beispielsweise kann es sich bei den Haltemitteln um Klebemittel handeln, so dass das Wärmeleitblech insgesamt an der Haltefläche verklebt wird.

Hierbei hat sich insbesondere ein doppelseitiges Klebeband als besonders geeignet herausgestellt. Dieses kann an dem Wärmeleitblech (insbesondere samt Rohrabschnitt) angebracht werden, nämlich mit einer ersten klebenden Seite. Die gegenüberliegende Seite des doppelseitigen Klebebandes kann dann von einer Schutzschicht, beispielsweise einer Schutzfolie, bedeckt sein.

Sofern diese Schutzschicht nicht abgezogen wird, kann das Wärmeleitblech (insbesondere samt daran bereits angeordnetem Rohrabschnitt oder Rohrsystem) somit gelagert und/oder verbracht werden, ohne dass ein ungewolltes Verkleben der gelagerten oder transportierten Wärmeleitblech-(Rohrsystem)einheit droht.

Die bauliche Einheit kann somit an einen Montageort verbracht werden und dort beispielsweise durch ein Abziehen der Schutzschicht aktiviert werden, wonach sie beispielsweise in eine Haltekassette oder auf einer Trägerplatte oder ähnlichem verklebt werden kann.

Anstelle von Kleber kann als Haltemittel selbstverständlich auch jedes andere geeignete Haltesystem genutzt werden: So ist es beispielsweise vorstellbar, dass das Wärmeleitblech magnetisch an der Haltefläche des Wärmetauschers angeordnet wird. Die Haltemittel können somit Magnete umfassen und/oder das Wärmeleitblech kann teilweise magnetisch ausgebildet sein oder ähnliches.

Grundsätzlich könnte aber auch auf Haltemittel verzichtet werden. So kann ein Wärmeleitblech beispielsweise (nachträglich) mit separatem Klebstoff an einer Haltefläche verklebt werden oder an einer Haltefläche verschweißt oder sonst wie befestigt werden.

Wird ein Kleber verwendet, so kann insbesondere ein Klebewulst manuell oder maschinell aufgebracht werden, insbesondere im Bereich des Rohrabschnittes und/oder des Zentralabschnittes des Wärmeleitbleches.

Ein derartiger Wulst aus einem viskosen (bis flüssigen) Kleber weist hierbei den Vorteil auf, dass dieser in ein gegebenenfalls vorhandenes Vlies eintreten kann. Alternativ oder zusätzlich kann der Klebstoff in diesem Fall auch in gegebenenfalls vorhandene Hohlräume im Bereich zwischen Rohrabschnitt und Wärmeleitblech eintreten und somit die Wärmeleiteigenschaften des Wärmetauschers verbessern.

Gemäß einer besonders vorteilhaften Ausgestaltung der Erfindung sind die Haltemittel - sofern sie denn vorgesehen sind - insbesondere ausschließlich in einem Bereich des Wärmeleitbleches angeordnet, in dem gerade keine Perforationen vorgesehen sind. Hierbei kann es sich insbesondere um den Zentralabschnitt handeln, welcher mit dem Rohrabschnitt zusammenwirkt.

Dies ermöglicht eine besonders gute akustische Eigenschaft des Wärmeleitbleches, da somit gerade keine Perforationen durch die Haltemittel inaktiv geschaltet werden.

Alternativ können die Haltemittel aber auch ausschließlich dem Zentralabschnitt zugeordnet sein, unabhängig davon, ob dieser Perforationen aufweist oder nicht.

Gemäß der bevorzugsten Ausführungsform der Erfindung sind die Perforationen, unter der Ausbildung von Fingern des Wärmeleitbleches, als nach außen offene Randausnehmungen ausgebildet, wobei oberhalb der Ausnehmungen Zwischenfinger des Wärmeleitbleches angeordnet sind.

Diese Finger weisen vorzugsweise die Form der Ausnehmungen auf.

Die Zwischenfinger sind dabei typischerweise zwischen den Fingern angeordnet (wie dies der Name bereits impliziert), was also bedeutet, dass sie insbesondere in einer Aufsicht oder einer Unteransicht des Wärmeleitbleches dazwischen angeordnet sind, und mit den Fingern eine alternierende Reihenfolge ausbilden.

Erfindungsgemäß handelt es sich um hochgestellte Zwischenfinger.

Diese hochgestellten Zwischenfinger können also durch Abkantungen oder Abknicken (wobei Abknicken im Sinne der Erfindung als Oberbegriff für ein Abkanten gemeint sein soll) aus der Blechebene herausgestellt werden.

Hierzu kann bevorzugterweise das Wärmeleitblech bzw. der Rohling zunächst seitlich eingeschnitten werden. Dadurch entstehen nebeneinander angeordnete Finger, welche abwechselnd entweder in der Ebene verbleiben oder hochgestellt werden können (die in der Ebene verbleibenden Finger können wie oben beschrieben dann aber auch in die Gegenrichtung herausgestellt werden, zum Zwecke der Vorspannung auf eine Haltefläche).

Auch auf diese Weise werden somit nach außen offene Randausnehmungen erzeugt, wobei die hochgestellten Zwischenfinger offensichtlich verbesserte thermische Eigenschaften des gesamten Wärmeleitbleches bzw. des gesamten Wärmetauschers ermöglichen können, insbesondere bei gleich guten oder annähernd gleich guten akustischen Eigenschaften.

Dies kann insbesondere damit zu tun haben, dass es bei zugeleiteter Luft aufgrund der Zwischenfinger zu Turbolenzen kommt, was insbesondere Konvektionseffekte hervorrufen oder optimieren kann.

Die Zwischenfinger können dabei bevorzugt als Paare auftreten, so dass in Axialrichtung des Wärmeleitbleches seitlich jeweils zwei Finger nicht hochgestellt werden (um später an der Haltefläche anzuliegen) und zwei (Zwischen-)Finger hochgesellt werden (um die seitliche Perforation auszubilden und Konvektionseffekte zu ermöglichen).

Lediglich der Vollständigkeit halber wird darauf hingewiesen, dass aber auch selbstverständlich andere, nicht achsensymmetrische Konfigurationen der Zwischenfinger und Finger möglich sind.

Gemäß der bevozugsten Ausführungsform der Erfindung stehen die Zwischenfinger dabei in einem Hochstellwinkel von der Haupterstreckungsebene des Wärmeleitbleches und/oder der Haltefläche und/oder den Fingern ab.

Insbesondere kann vorgesehen sein, dass die Finger dabei in der Haupterstreckungsebene des Wärmeleitbleches und/oder parallel zur Haltefläche angeordnet sind.

Hierbei ist anzumerken, dass es sich bei der Haupterstreckungsebene des Wärmeleitbleches typischerweise um die Blechrohlingsebene des Wärmeleitbleches handelt. Üblicherweise liegen die (nicht hochgestellten) Finger dabei typischerweise in der Haupterstreckungsebene, es sei denn, sie sind, wie oben beschrieben (entgegen der Hochstellrichtung) vorgespannt, um eine sichere Anbringung auf der Haltefläche zu ermöglichen.

Der Hochstellwinkel der Zwischenfinger beträgt typischerweise zwischen 1° und 180°, vorzugsweise zwischen 25° und 100°.

Bei der bevorzugsten Ausführungsform beträgt der Hochstellwinkel zwischen 70° und 90°, insbesondere ungefähr 80°.

Die Hochstellwinkel auf beiden Seiten der Wärmeleitblechsicke sind dabei typischerweise identisch, jedoch spiegelsymmetrisch umgekehrt angeordnet (natürlich sind aber auch andere Ausführungsformen von der Erfindung umfasst, bei welchen die Hochstellwinkel sich innerhalb des Wärmeleitbleches unterscheiden).

Bevorzugt ist eine Fassung, bei welcher sämtliche Hochstellwinkel des Wärmeleitbleches identisch sind.

Gemäß einer alternativen Ausgestaltung können die Zwischenfinger aber auch in unterschiedlichen Hochstellwinkeln abstehen. Insbesondere kann dies auf Zwischenfinger auf einer gemeinsamen Seite des Wärmeleitbleches zutreffen.

Auf diese Weise kann es insbesondere bei oberhalb der Wärmetauscherebene zugeführter Zuluft zu gewollten Verwirbelungen bzw. Turbolenzen kommen, welche Konvektionseffekte fördern können.

Die Finger und Zwischenfinger sind insbesondere alternierend angeordnet.

Demnach kann also auf jeden (nicht hochgestellten) Finger ein (hochgestellter) Zwischenfinger folgen und auf diesen wieder ein (nicht hochgestellter) Finger.

Diese alternierende Anordnung kann durchgehend bzw. kontinuierlich vorgesehen sein, insbesondere an beiden Seiten des Wärmeleitbleches.

Gemäß einer weiteren vorteilhaften Ausgestaltung kann vorgesehen sein, dass die Zwischenfinger in sich gedreht bzw. verdrillt ausgestaltet sind.

In diesem Sinne werden die Zwischenfinger nicht nur hochgestellt, sondern auch durch (rotatorische) Kräfte verdreht bzw. verdrillt.

Auch eine derartige Ausgestaltung kann die Verwirbelung von oberhalb des Wärmetauschers bzw. Wärmeleitbleches zugeführter Luft verbessern und Turbolenzen fördern. In diesem Sinne sind bei derartigen Wärmetauschern nämlich laminare Störungen eher unerwünscht, welchen durch ein Verdrillen entgegengewirkt wird.

Gemäß einem weiteren Aspekt der Erfindung wird die gestellte Aufgabe durch einen Wärmetauscher nach Patentanspruch 11 gelöst. Dieser weist ein erfindungsgemäßes Wärmeleitblech auf, welches einen Rohrabschnitt an einer Haltefläche des Wärmetauschers festlegt.

Bei dem Wärmetauscher kann es sich insbesondere um einen Flächenwärmetauscher handeln, also einen Wärmetauscher, welcher typischerweise große Flächen in Räumen überspannt. Derartige Wärmetauscher können beispielsweise der Decke oder dem Bodenbereich oder dem Wandbereich eines Raumes oder einer Außenterrasse oder -Wand oder ähnlichem zugeordnet sein und sollen der Wärmeregulierung dienen.

Durch die Rohrabschnitte kann insbesondere ein kühlendes oder heizendes Medium geleitet werden, so dass der Wärmetauscher insgesamt kühlende oder heizende Effekte erzeugt.

Der Vollständigkeit halber wird darauf hingewiesen, dass sämtliche im Zusammenhang mit dem erfindungsgemäßen Wärmeleitblech beschriebenen Ausführungen und Vorteile auch auf den erfindungsgemäßen Wärmetauscher übertragbar sein sollen und umgekehrt.

Insbesondere kann das Wärmeleitblech bei dem erfindungsgemäßen Wärmetauscher demnach einen Rohrabschnitt übergreifen (und diesen zwischen sich und der Haltefläche sandwichen) und/oder die Perforationen sind als nach außen offene Randausnehmungen ausgebildet, wobei oberhalb der Ausnehmungen insbesondere Zwischenfinger des Wärmeleitbleches angeordnet sind.

Diese Aussage gilt insbesondere auch im Zusammenhang mit einem erfindungsgemäßen Verfahren nach Patentanspruch 12. Sämtliche voranstehende Vorteile und Ausführungsformen sollen somit auch auf das erfindungsgemäße Verfahren übertragbar sein und umgekehrt.

Das erfindungsgemäße Verfahren zeichnet sich insbesondere dadurch aus, dass an einem Wärmeleitblech nach außen offene Randausnehmungen ausgebildet werden. Hierbei entstehen Zwischenfinger. Die Randausnehmungen stellen dabei Perforationen dar.

Die Perforationen nach Art von nach außen offenen Randausnehmungen können insbesondere ausgestanzt oder ausgenibbelt werden.

Dies kann beispielsweise ausgehend von einem Blechrohling geschehen.

In einem weiteren Verfahrensschritt kann vorzugsweise anschließend (alternativ davor) eine Sicke in das Wärmeleitblech eingebracht werden. Die Sicke wird hierbei typischerweise durch einen Prägevorgang erstellt. Alternativ kann auch jedes andere geeignete Verfahren gewählt werden, beispielsweise eine Rollierung oder ähnliches. Eine Sicke zu prägen hat sich aber als besonders vorteilhaft herausgestellt.

Insbesondere kann das Verfahren einen Schritt umfassen, nach welchem Seiteneinschnitte in dem Wärmeleitblech vorgesehen werden und anschließend einige der dadurch entstehenden Finger (nach oben) abgeknickt werden, vorzugsweise alternierend (jeder zweite).

In diesem Sinne kann besonders bevorzugter Weise vorgesehen werden, dass die Verfahrensschritte des Einschneidens des Wärmeleitbleches und des Hochstellens der (Zwischen-)Finger in einem einzigen Arbeitsschritt erfolgen.

Hierzu kann erfindungsgemäß insbesondere eine spezielles Kombiwerkzeug verwendet werden, welches das Einschneiden und Hochstellen der hierbei entstehenden Finger in einem einzigen Arbeitsschritt durchführt.

Zusätzlich oder alternativ können zwei Seitenabschnitte des Wärmeleitbleches in einem Anstellwinkel zueinander ausgebildet werden. Die Seitenabschnitte können also entsprechend geformt, beispielsweise gebogen, werden oder ähnliches. Hierzu wird insbesondere auf die voranstehenden Ausführungen zu dem Anstellwinkel verwiesen.

Weitere Vorteile der Erfindung ergeben sich aus den nicht zitierten Unteransprüchen sowie aus der nachfolgenden Beschreibung der in den Figuren 10 bis 12 dargestellten Ausführungsbeispiele. Darin zeigen:
- Fig. 1: in einer sehr schematischen Schnittansicht einen an einer Gebäudedecke angeordneten Flächenwärmetauscher, unter exemplarischer Ansicht zweier Wärmeleitbleche,
- Fig. 2: in einer schematischen Schnittansicht, unter Fortlassung wesentlicher Elemente, die Anordnung dreier Flächenwärmetauscher in einem Raum,
- Fig. 3: eine sehr schematische, perspektivische Schrägaufsicht auf einen inneren Randbereich eines Flächenwärmetauschers, etwa gemäß Ansichtspfeil III in Fig. 1, jedoch unter Fortlassung einer Trägerplatte,
- Fig. 4: in einer sehr schematischen Aufsicht ein Rohling zur Herstellung eines Wärmeleitbleches,
- Fig. 5a: in einer Ansicht etwa gemäß Fig. 4 ein weiter verarbeiteter Rohling, nach Einsatz einer Nibbelmaschine zur Ausführung einer randseitigen Perforation bzw. zur Ausbildung von randseitigen Zungen,
- Fig. 5b: eine sehr schematische Schnittansicht, etwa entlang Schnittlinie Vb-Vb, des in Fig. 5a dargestellten Körpers,
- Fig. 6a: in einer Ansicht gemäß Fig. 5a, der in Fig. 5a dargestellte Rohling nach Durchführung eines Prägevorganges zum Einbringen einer Sicke,
- Fig. 6b: in einer Ansicht gemäß Fig. 5b, der in Fig. 5b dargestellte Rohling nach Durchführung eines Prägevorganges zum Einbringen einer Sicke,
- Fig. 6c: in einer Ansicht gemäß Fig. 6b ein alternatives, leicht abgewandeltes Wärmeleitblech mit vorgespannten Seitenbereichen,
- Fig. 7a: in einer Ansicht gemäß Fig. 6a das Wärmeleitblech gemäß Fig. 6a bei in die Sicke eingelegtem Rohrabschnitt,
- Fig. 7b: in einer Ansicht gemäß Fig. 6b das Wärmeleitblech gemäß Fig. 6b bei in die Sicke eingelegtem Rohrabschnitt,
- Fig. 7c: in einer Ansicht gemäß Fig. 7b ein alternatives, leicht abgewandeltes Wärmeleitblech mit vorgespannten Seitenbereichen,
- Fig. 8a: die Vorrichtung gemäß Fig. 7a bei aufgebrachtem, doppelseitigem Klebeband,
- Fig. 8b: die Vorrichtung gemäß Fig. 7b bei aufgebrachtem, doppelseitigem Klebeband,
- Fig. 8c: in einer Ansicht gemäß Fig. 8b ein alternatives, leicht abgewandeltes Wärmeleitblech mit vorgespannten Seitenbereichen,
- Fig. 9: in einer Ansicht gemäß Fig. 5a eine alternative Ausgestaltung von Perforationen, welche in diesem Ausführungsbeispiel nicht als nach außen offene Randausnehmungen ausgebildet sind, sondern als geschlossene, randseitige Ausnehmungen,
- Fig. 10: in einer sehr schematischen, perspektivischen Schrägaufsicht ein exemplarischer Abschnitt eines erfindungsgemäßen Wärmeleitblechs mit hochgestellten Zwischenzungen,
- Fig. 11a: in einer Ansicht gemäß Fig. 7a ein vollständiges Wärmeleitblech gemäß Fig. 10, bei in die Sicke eingelegtem Rohrabschnitt,
- Fig. 11b: eine sehr schematische Frontansicht des in Fig. 11a in einer Unteransicht dargestellten Wärmeleitbleches samt Rohrabschnitt, etwa entlang Ansichtspfeil XIb in den Fig. 10 und 11a,
- Fig. 11c: in einer Ansicht gemäß Fig. 11b ein alternatives, leicht abgewandeltes Wärmeleitblech mit vorgespannten Seitenbereichen, und
- Fig. 12: in einer Ansicht, etwa gemäß Fig. 11b, ein alternatives, leicht abgewandeltes Wärmeleitblech mit einem größeren Hochstellwinkel der Zwischenzungen, unter zusätzlicher Darstellung bzw. Andeutung der Haltefläche.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbeispiele betroffen sind - gleiche oder vergleichbare Teile oder Elemente oder Bereiche mit gleichen Bezugszeichen, teilweise unter Hinzufügung kleiner Buchstaben, Zahlen und/oder Apostrophen, bezeichnet. Gleiches gilt für die der Figurenbeschreibung nachfolgenden Patentansprüche.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mitumfasst.

Alle offenbarten Merkmale sind für sich erfindungswesentlich. In die Offenbarung der Anmeldung wird hiermit auch der Offenbarungsinhalt der gegebenenfalls zugehörigen Prioritätsunterlagen (Abschrift der Voranmeldung) sowie der gegebenenfalls zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

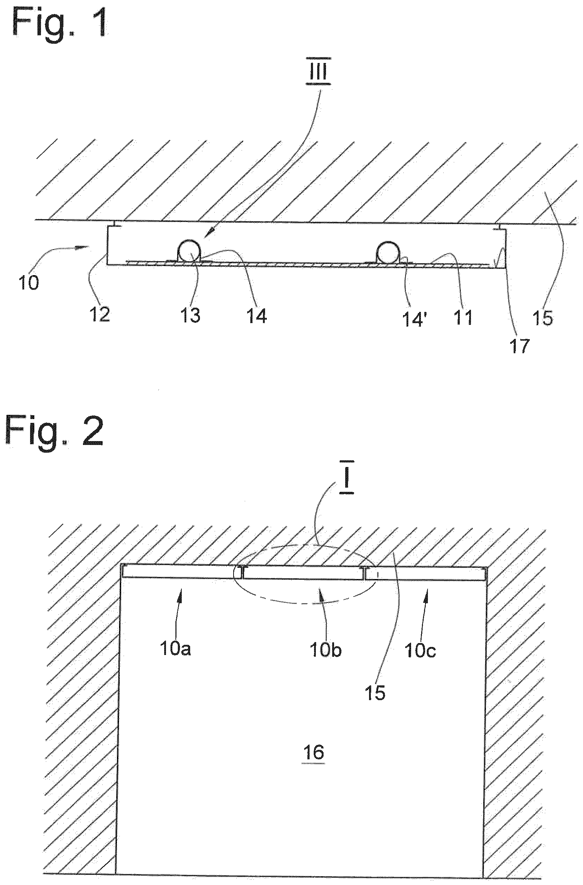

Fig. 1 zeigt zunächst exemplarisch einen erfindungsgemäßen (Flächen-)Wärmetauscher 10 vom Kassettentyp. In der dargestellten Ausführung liegt eine Trägerplatte 11 in einer Kassette 12 ein, welche wiederum an einer Zimmer- oder Raumdecke 15 angeordnet ist. Die Trägerplatte 11 ist an ihrer Unterseite an der Kassetteninnenseite verklebt und liegt etwa mittig ein. Auf der Trägerplatte 11 ist ein Rohrsystem mit Rohrabschnitten 13 angeordnet und mit Hilfe von, insbesondere streifenartigen, erfindungsgemäßen Wärmeleitblechen 14 bzw. 14' befestigt.

In dem dargestellten Ausführungsbeispiel übergreift das streifenartige Wärmeleitblech 14, 14' das Rohr 13 und ist über nicht dargestellte Haltemittel an der Trägerplatte 11 fest angeordnet, insbesondere verklebt.

Der Vollständigkeit halber sei angemerkt, dass Konfigurationen mit oder ohne Trägerplatte 11 bestehen. Alternativ könnten das Rohrsystem 13 und die Wärmeleitbleche 14, 14' auch direkt auf der Innenseite 17 der Stirnseite der Kassette 12 verklebt sein. Beide Konfigurationen sind von der Erfindung umfasst.

Mehrere erfindungsgemäße Flächenwärmetauscher 10 können ausweislich Fig. 2 beispielsweise im Bereich der Decke 15 eines Gebäuderaums 16 angebracht werden, um den Raum 16 deckenseitig zu klimatisieren. Die Klimatisierung kann dabei insbesondere einem Heizen oder alternativ einem Kühlen des Raumes 16 dienen. Insbesondere aus optischen Gründen werden für derartige Anforderungen oftmals Flächenwärmetauscher des Kassettentyps eingesetzt, bei welchen die eigentlichen Funktionsbauteile des Flächenwärmetauschers 10, wie Wärmeleitblech oder Rohrsystem, in einer Haltekassette 12 angeordnet sind.

Fig. 2 zeigt hierbei ein Flächenwärmetauschersystem, bestehend aus drei Flächenwärmetauschern 10a, 10b und 10c, deren Haltekassetten im Wesentlichen kaskadenartig, nebeneinander angeordnet sind.

Aus Gründen der Übersichtlichkeit ist beispielsweise das Rohrsystem in Fig. 2 nicht dargestellt. Den Rohren aller drei Wärmetauscher 10a, 10b, 10c kann aber beispielsweise ein gemeinsamer Zufluss und Abfluss zugeordnet sein.

Nicht erkenntlich sind sowohl in Fig. 1 als auch in Fig. 2 eine Akustiklochung der Haltekassette(n) 10 bzw. der Trägerplatte 11 und insbesondere auch erfindungsgemäße Perforationen der Wärmeleitbleche. Solche könnten in Querschnittsansichten gemäß den Figuren 1 und 2 grundsätzlich zwar dargestellt werden, würden aber die Übersichtlichkeit der Figuren gefährden, weshalb sie in den Figuren 1 und 2 fortgelassen wurden, so dass Figuren 1 und 2 zunächst lediglich der Darstellung einer grundsätzlichen Anordnung eines erfindungsgemäßen Wärmetauschers bzw. von Wärmeleitblechen dienen.

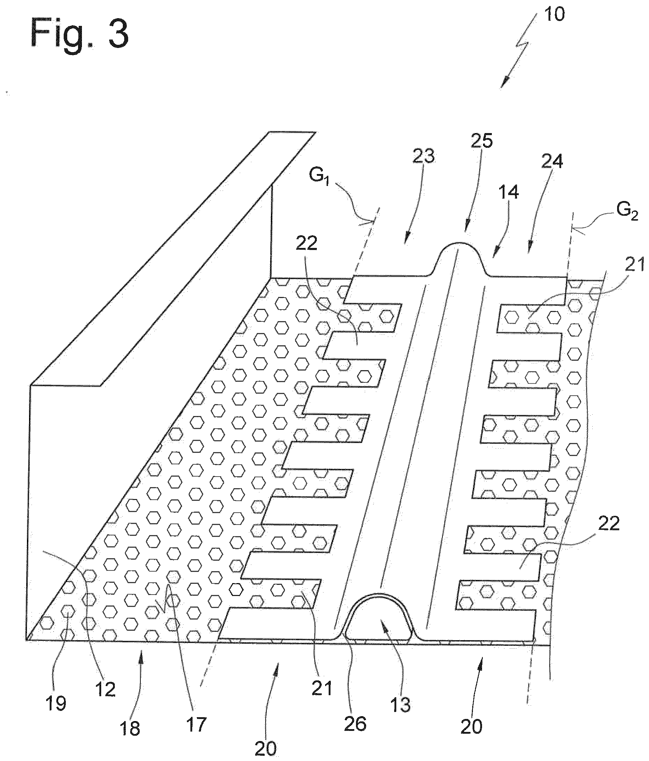

Eine detailliertere Beschreibung der Erfindung, insbesondere der erfindungsgemäßen Anordnung der Perforationen im Wärmeleitblech, ermöglicht dann Fig. 3:
Fig. 3 zeigt hierbei in einer sehr schematischen, isometrischen Schrägaufsicht einen Teilbereich eines erfindungsgemäßen Wärmetauschers 10, welcher Teilbereich in Fig. 1 mit dem Ansichtspfeil III versehen ist (insbesondere unter Fortlassung der Decke 15).

Lediglich aus Gründen des Offenbarungsgehaltes weist der Wärmetauscher 10 gemäß Fig. 3 zwei Unterschiede zu jenem gemäß Fig. 1 auf. Diese Unterschiede können optional bei einem erfindungsgemäßen Wärmeleitblech bzw. Wärmetauscher vorgesehen sein oder auch nicht. Daher sind die Elemente des Wärmetauschers in beiden Figuren mit denselben Bezugszeichen versehen.

Erstens weist das Rohrsystem bzw. der Rohrabschnitt 13 ausweislich Fig. 3 eine im Querschnitt D-artige Form auf (im Gegensatz zu einer runden Form gemäß Fig. 1). Eine derartige Form ist insbesondere für Rohre der Anmelderin typisch, die Erfindung ist aber auch ohne weiteres bei anderen Rohrquerschnitten einsetzbar.

Zweitens ist die in Fig. 1 dargestellte Trägerplatte 11 in Fig. 3 nicht vorhanden. Dies bedeutet also, dass ein erfindungsgemäßes Wärmeleitblech 14 einen Rohrabschnitt 13 entweder unmittelbar auf der Innenseite 17 der Kassette 12 festlegen kann oder alternativ, wie in Fig. 1 dargestellt, mittelbar, nämlich beispielsweise über eine Trägerplatte 11, an welcher das Rohrsystem 13 vom Wärmeleitblech 14 dann unmittelbar festgelegt ist. Mit anderen Worten kann, je nach Anforderung, das Wärmeleitblech 14 samt Rohrsystem oder Rohrabschnitt 13 direkt in die Haltekassette eingeklebt werden oder (zunächst) auf eine Trägerplatte 11, welche dann in die Kassette 12 eingebracht (und dort befestigt) wird.

Ein Blick auf Fig. 3 verdeutlicht hierbei, dass die Haltekassette 12 eine Akustiklochung 18 aufweist, welche aus zahlreichen Löchern 19 besteht.

Diese dienen einer Schallabsorption durch die Kassette 12, indem die Schallwellen nicht vollständig an der Unterseite der Haltekassette in den Raum zurück reflektiert werden, sondern (zum Teil) durch die Löcher 19 in die Kassette 12 eintreten können.

Jedoch verdeutlicht Fig. 3 auch, dass die Löcher 19 jedenfalls teilweise von dem Wärmeleitblech 14 abgedeckt und somit "inaktiv" geschaltet werden.

Ein (herkömmliches sowie erfindungsgemäßes) Wärmeleitblech weist dabei typischerweise eine von zwei angedeuteten Geraden G₁, G₂ ausgebildete Außenkontur auf, so dass der Bereich zwischen den beiden Geraden G₁, G₂ bei Nutzung eines herkömmlichen Wärmeleitbleches vollständig akustisch inaktiv geschaltet werden würde.

Das erfindungsgemäße Wärmeleitblech 14 bietet nunmehr ausweislich Fig. 3 aber die Besonderheit, dass es eine Perforierung 20 mit Perforationen 21 aufweist.

Diese Perforationen sind im Ausführungsbeispiel gemäß Fig. 3 (lediglich beispielhaft) im Wesentlichen rechteckig, und insbesondere als nach außen offene Randausnehmungen 21, ausgebildet.

Die Perforationen 21 liegen somit sämtlich innerhalb der von den Geraden G₁ und G₂ gebildeten Hüllkontur des Wärmeleitbleches 14 (und springen hinter diese zurück).

Durch das Vorsehen von Perforationen 21 am Wärmeleitblech 14 entstehen gleichermaßen (randseitige) Zungen 22 an dem Wärmeleitblech.

Fig.3 verdeutlicht nun, dass die Akustiklochung 18 zwar im Bereich der Zungen 22 im Wesentlichen inaktiv geschaltet ist, in dem Bereich der dazwischen liegenden Perforationen 21 aber aktiv bleiben kann.

Auf diese Weise werden die akustischen Eigenschaften eines Wärmetauschers 10 im Vergleich zu einem Wärmetauscher mit einem herkömmlichen Wärmeleitblechdesign deutlich verbessert, ohne dass dies mit einem merklichen Abfall der Wärmeleiteigenschaften einherginge, insbesondere da die Zungen 22 für eine hinreichende Wärmeübertragung vom Rohrabschnitt 13 auf die Innenseite 17 der Kassette 12 sorgen (bzw. auf die Trägerplatte 11 in einer Konfiguration gemäß Fig. 1).

Wie Fig. 3 weiterhin verdeutlicht, sind die Perforationen 21 (sowie die Zungen 22) im Wesentlichen (insbesondere vollständig) Seitenabschnitten 23 und 24 des Wärmeleitbleches 14 zugeordnet, während der Zentralabschnitt 25 im Wesentlichen (insbesondere durchgehend) perforationslos ausgebildet ist.

Der Zentralabschnitt 25 ist aber nicht eben ausgebildet, sondern weist eine Sicke 26 zur Aufnahme des Rohrsystems bzw. des Rohrabschnittes 13 auf.

Abschließend sei zu Fig. 3 angemerkt, dass sofern in diesem Ausführungsbeispiel eine Trägerplatte 11 gemäß Fig. 1 vorgesehen werden sollte, diese typischerweise ebenfalls eine Akustiklochung aufweisen würde, welche insbesondere (teil-)kongruent zur Akustiklochung 18 der Haltekassette 12 angeordnet sein könnte.

Mithin ist die Perforierung 20 des Wärmeleitbleches auch als Akustiklochung bezeichenbar.

Lediglich aus Gründen einer besseren Verständlichkeit wird in der vorliegenden Anmeldung von einer Akustiklochung einerseits (in Bezug auf die Haltekassette 12 oder die Trägerplatte 11) gesprochen und in Bezug auf das Wärmeleitblech andererseits von einer Perforierung 20. Dies soll allerdings nicht bedeuten, dass diese Terme unterschiedliche Lochformen beschreiben. Vielmehr könnte die Perforierung anstelle der dargestellten rechteckigen Randausnehmungen ganz anlog zu der Akustiklochung 18 der Haltekassette ausgebildet sein. Mithin sollen keine Formen der Löcher oder Perforierungen von der Erfindung ausgeschlossen sein.

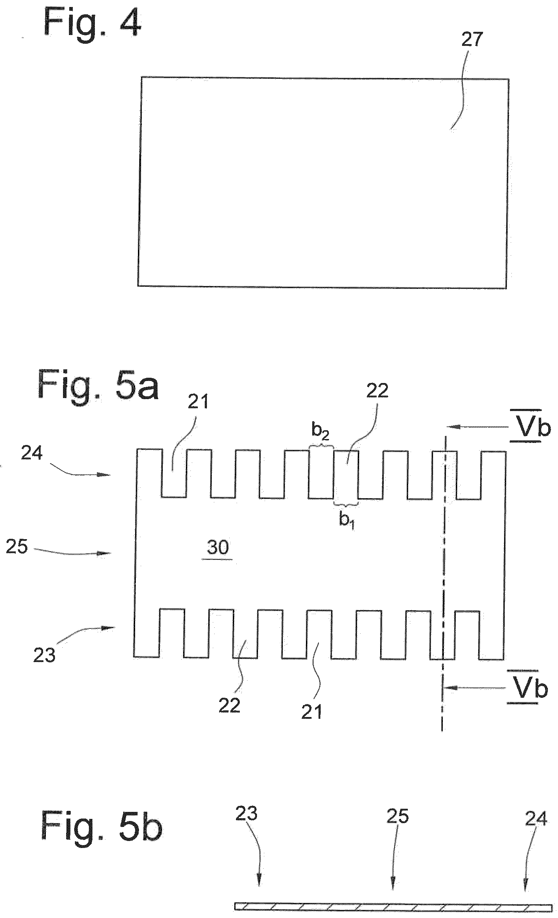

Die Figurenabfolge der Fig. 4 bis 8 soll dann die Herstellung eines erfindungsgemäßen Wärmeleitbleches 14 bzw. einer Einheit aus Wärmeleitblech 14 und Rohrabschnitt 13 verdeutlichen:
So zeigt Fig. 4 zunächst in einer sehr schematischen, flächenhaften Aufsicht einen Rohling 27 nach Art eines Bleches. Dieses Blech ist vorzugsweise aus Aluminium, insbesondere Hartaluminium, ausgebildet (im Gegensatz zu Weichaluminium, welches häufig für Wärmeleitbleche des Standes der Technik eingesetzt wird).

Aus diesem Rohling 27 wird in einem ersten Schritt die in Fig. 5a dargestellte Grundform des Wärmeleitbleches 14 herausgearbeitet, indem, insbesondere mit Hilfe einer Nibbelmaschine, die Perforationen 21 aus dem Rohling 27 herausgenibbelt bzw. herausgestanzt werden. Hierdurch entstehen die in Fig. 5a noch einmal dargestellten randseitigen Zungen 22.

Die Querschnittsansicht gemäß Fig. 5b verdeutlicht dabei, dass das Wärmeleitblech in diesen Zustand noch flach ausgebildet ist. Insofern weist auch der Rohling gemäß Fig. 4 einen identischen Querschnitt gemäß Fig. 5b auf.

Zudem soll zu den Figuren 4 und 5 angemerkt werden, dass hier lediglich aus Gründen der Übersichtlichkeit in Fig. 4 ein Rohling 27 mit einer Hüllkontur vorgesehen ist, welche der Hüllkontur des Zwischenproduktes gemäß Fig. 5a entspricht. Tatsächlich ist durch die besondere Konfiguration der Zungen 22, welche insbesondere dieselbe Breite b₁ aufweisen können wie die Perforationen 21, die eine identische Breite b₂ (also mit b₁ = b₂) aufweisen, ein sogenanntes "verschnittloses Stanzen" bzw. "verschnittloses Nibbeln" möglich: So können aus einem großen (nicht dargestellten) Blech mehrere Zwischenprodukte gemäß Fig. 5a herausgearbeitet werden, ohne dass hier wesentlicher Verschnitt, also im Wesentlichen kein Restmaterial, anfällt, da dasjenige, was für die Ausbildung einer Perforation 21 beim ersten Zwischenprodukt entfernt wird, eine Zunge 22 eines benachbarten, aus demselben Blech herausgearbeiteten Zwischenproduktes bereitstellen kann.

Mithin ermöglicht die gleiche Breite von Zunge und Perforation somit ein (im Wesentlichen) verschnittsloses Arbeiten.

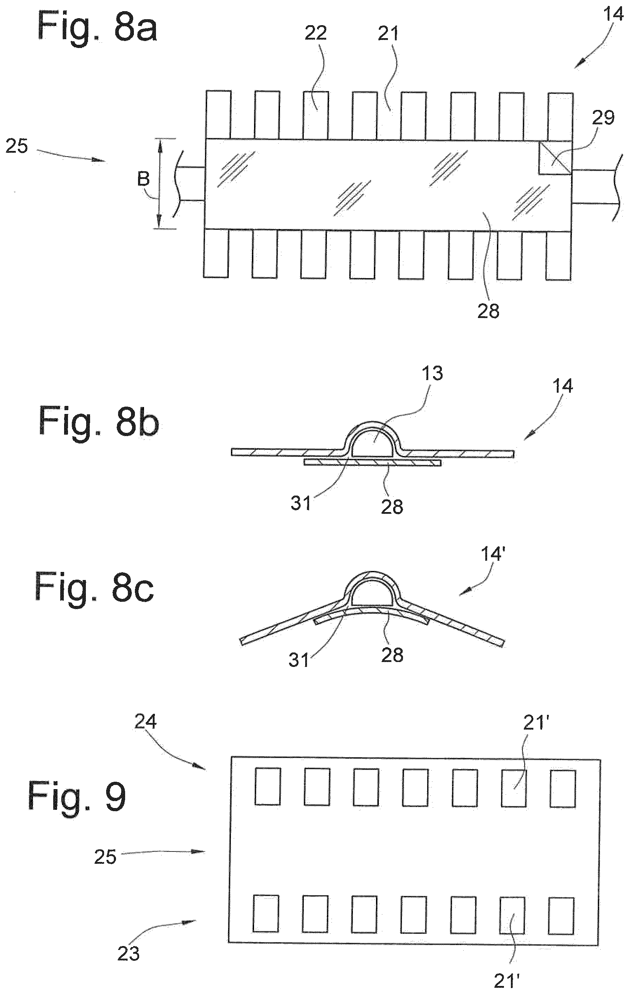

Alternativ zu der in Fig. 5a dargestellten Ausführung der Perforationen 21 können selbstverständlich auch ganz andersartige Perforationen des Bleches 27 vorgesehen werden, so beispielsweise Lochungen, wie sie in Fig. 3 für die Haltekassette mit 19 bezeichnet sind oder aber noch andere Perforationen. In diesem Sinne zeigt Fig. 9 aus dem Blech 27 herausgearbeitete Perforationen 21', welche zwar auch als Randausnehmungen bezeichenbar sind, da sie lediglich in den Seitenabschnitten 23 und 24 des Rohlings vorgesehen werden (und gerade nicht im Zentralabschnitt 25). Hierbei handelt es sich aber nicht um nach außen offene Randausnehmungen, sondern eher um Ausnehmungen im Randbereich. Fig. 9 soll dabei lediglich verdeutlichen, dass die Perforationen 21, 21' nicht nach außen offen ausgebildet sein müssen, sondern alternativ vom Blechmaterial vollständig umgeben sein können.

Sämtliche Ausführungsbeispiele in den Figuren 1 bis 8 können selbstverständlich auch mit Perforationen 21', wie sie in Fig. 9 dargestellt sind (oder noch anderen) erreicht werden und sollen im Zusammenhang mit diesen als offenbart gelten.

Zurück zu Fig. 5a sei zudem angemerkt, dass die Perforationen 21 offensichtlich nicht gleichmäßig über die gesamte Oberfläche 30 des Wärmeleitblechs 14 bzw. des Rohlings verteilt sind, sondern beispielsweise lediglich im Randbereich, also im Bereich der Seitenabschnitte 23 und 24 angeordnet sind. Somit ergibt sich insbesondere auch, dass die Seitenabschnitte 23, 24 mehr Perforationen aufweisen (in dem Ausführungsbeispiel gemäß Fig. 5a jeweils sieben) als der Zentralabschnitt 25 (keine Perforationen).

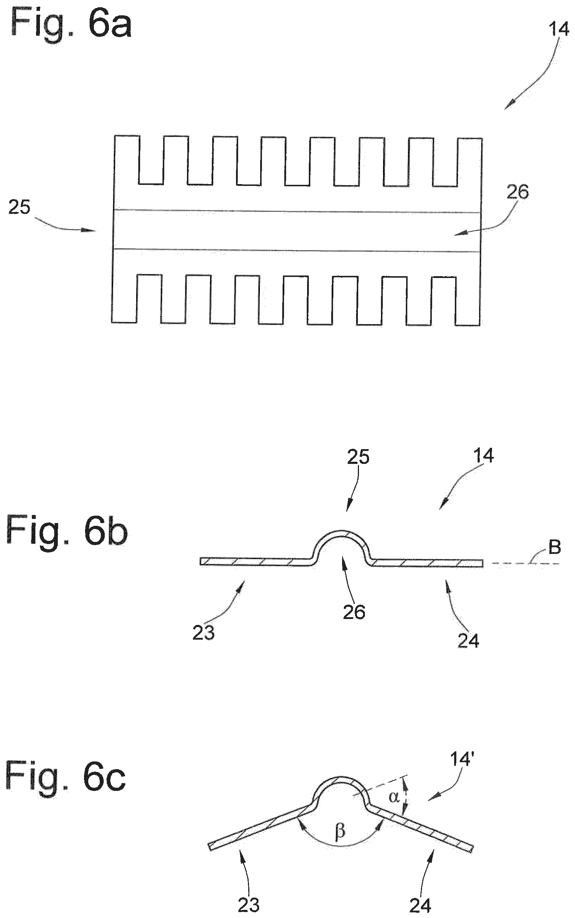

Fig. 6a zeigt das Ergebnis eines nächsten Verfahrensschrittes, in einer Ansicht gemäß Fig. 5a, wobei sich das Zwischenprodukt nunmehr darin unterscheidet, dass in den Zentralabschnitt 25 eine Sicke 26 eingearbeitet, insbesondere eingeprägt, wurde.

Die Querschnittsansicht gemäß Fig. 6b verdeutlicht dies.

Die Querschnittsansicht gemäß Fig. 6c zeigt dann eine alternative, optionale Ausgestaltung des Wärmeleitbleches, welches der Einfachheit halber mit 14' bezeichnet wird. Hier erfolgt optional nämlich ein weiterer Bearbeitungsschritt: So werden die beiden Seitenabschnitte 23, 24 aus der Blechebene, bezüglich der offenen Sicke 26 nach unten, herausgebracht bzw. herausgeformt.

Diese Herausformung der Seitenabschnitte 23, 24 bewirkt, dass sich diese in einem Anstellwinkel α zueinander befinden (im Ausführungsbeispiel gemäß Fig. 6b liegen sie hingegen gemeinsam in der Blechebene B, so dass kein Anstellwinkel entsteht).

Mit anderen Worten bilden die Seitenabschnitte 23, 24 zwischen sich einen Winkel β aus, welcher kleiner ist als 180° (in der Version gemäß Fig. 6b beträgt der Winkel β hingegen genau 180°).

Diese optionale Ausgestaltung mit den angestellten Seitenabschnitten 23 und 24 bewirkt beim nachfolgenden, in den Figuren 1 und 3 dargestellten, Anbringen an eine Haltefläche eine gewisse Vorspannung des Wärmeleitbleches 14' gegen die Haltefläche, was gegebenenfalls zu einer besonders guten Wärmeübertragung führen kann, da insbesondere die Zungen 22 bzw. die Seitenabschnitte 23, 24 sicher an der Haltefläche anliegen.

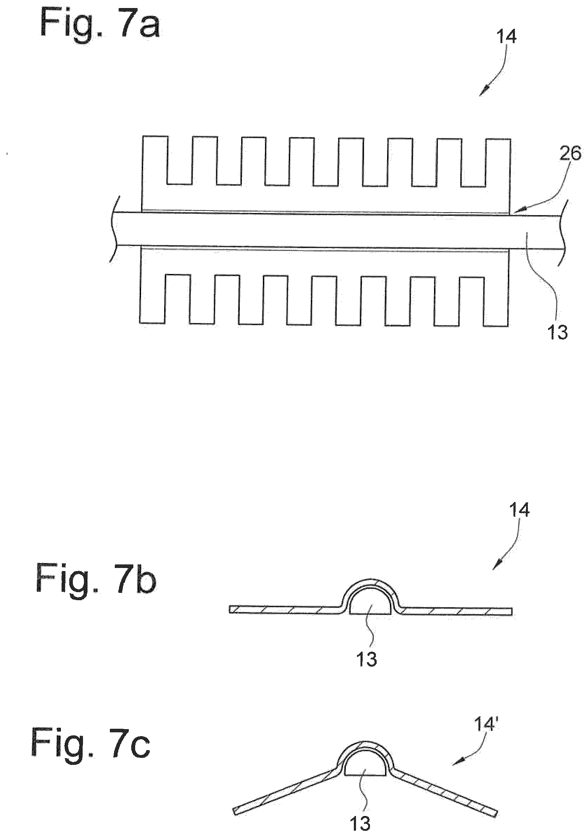

Auch wenn die Wärmeleitbleche in den Figuren 1 und 3 meist mit dem Bezugszeichen 14 (und nicht 14') bezeichnet sind, sollen die Zeichnungen derart verstanden werden, dass diese optional Wärmeleitbleche 14' zeigen, insbesondere da der reinen Zeichnung nicht entnehmbar ist, ob es sich um ein Wärmeleitblech 14 oder 14' handelt (dies gilt gleichfalls für die Ansicht der Fig. 6a und der nachfolgenden Figuren 7a sowie 8a).

Hierbei zeigt Fig. 7a, dass in einem nächsten Verfahrensschritt ein Rohrabschnitt 13 in den Bereich der Sicke 26 des Wärmeleitbleches 14 eingebracht oder eingelegt werden kann. Je nach Ausführungsform kann der Rohrabschnitt 13 optional in die Sicke 26 einclipsbar sein, derart, dass er durch den Clipsvorgang in dem Wärmeleitblech 14 (unverlierbar) gehalten wird. Alternativ kann der Rohrabschnitt auch lediglich lose in die Sicke 26 eingesetzt werden, je nach Ausführungsform. Auch das Einlegen soll ausweislich der Figuren 7b und 7c für beide Wärmeleitblechkonfigurationen 14 und 14' offenbart sein.

In einem letzten Verfahrensschritt gemäß Fig. 8a können nunmehr Haltemittel an dem Wärmeleitblech 14 befestigt werden. In der Unteransicht gemäß Fig. 8a ist exemplarisch ein doppelseitiges Klebeband 28 am Zentralabschnitt 25 des Wärmeleitbleches 14 verklebt worden. Idealerweise, aber nicht notwendigerweise, ist das Klebeband 28 derart angeordnet, dass es weder die Perforationen 21 noch die Finger 22 überdeckt. In dem Ausführungsbeispiel reicht das Klebeband 28 aber exemplarisch genau bis an den Beginn der Perforation 21 bzw. Finger 22 heran und bedeckt somit den gesamten Zentralabschnitt 25, also den Abschnitt, über dessen Breite B keine Perforationen angeordnet sind, ab.

Die Figuren 8b und 8c zeigen auch diese Klebebandanordnung für beide Konfigurationen 14, 14' des Wärmeleitbleches.

Um nun von einer Konfiguration gemäß Fig. 8a zu einer Anordnung gemäß den Figuren 1 oder 3 zu gelangen, kann die in Fig. 8a dargestellte Einheit, beispielsweise noch am Produktionsort, in eine Haltekassette 12 eingeklebt oder auf einer Trägerplatte 11 verklebt werden.

Alternativ kann die Einheit auch so wie in Fig. 8a dargestellt zunächst an einen (entfernten) Montageort transportiert werden, an welchen beispielsweise auch die Kassette 12 geliefert wird. Somit kann ein Einkleben des Produktes gemäß Fig. 8a dann am Montageort erfolgen.

Wieder alternativ kann eine Trägerplatte 11 mit einer daran angeordneten Wärmeleitblech-Rohrsystemkonfiguration zum Montageort gebracht werden, um dort in der Haltekassette verklebt zu werden.

Zum Anbringen des Wärmeleitbleches 14 gemäß Fig. 8a an einer entsprechenden Haltefläche kann dabei eine in Fig. 8a sichtbare Schutzschicht des doppelseitigen Klebebandes 28 abgezogen werden. Hierfür kann ein Nutzer beispielsweise eine Ecke 29 dieser Schutzschicht hintergreifen und abziehen.

Der Vollständigkeit halber sei darauf hingewiesen, dass das Wärmeleitblech 14 in der vorliegenden Anmeldung teilweise mit und teilweise ohne Haltemittel (hier doppelseitiges Klebeband 28) als Wärmeleitblech bezeichnet wird. Die Haltemittel können mithin zum Wärmeleitblech gehören. Typischerweise gehört das Rohrsystem 13 aber nicht zum Wärmeleitblech. Da dieses aber insbesondere von dem doppelseitigen Klebeband 28 bzw. den Haltemitteln gegebenenfalls überdeckt wird, entsteht eine bauliche Einheit, was die obigen Ausführungen begründet.

In Bezug auf die Figuren 8a-c sei abschließend angemerkt, dass diese lediglich eine Möglichkeit darstellen, ein Haftmittel am Wärmeleitblech 14, 14' bzw. dem Rohrabschnitt 13 anzubringen. Stattdessen könnte an gleichen, ähnlichen oder vergleichbaren Stellen auch ein Klebewulst aus einem viskosen (bis flüssigen) Klebstoffmaterial angebracht werden (nicht dargestellt), was insbesondere den Vorteil hätte, dass dieser Klebstoff (in den Figuren 8b und 8c mit dem Bezugszeichen 31 versehene) Hohlräume zwischen dem Wärmeleitblech 14, 14' und dem Rohrabschnitt 13 füllen könnte, was zu einer Verbesserung der Wärmeleitfähigkeit des gesamten Wärmetauschers führen würde.

Außerdem hätte der Einsatz eines derartigen Klebewulstes bzw. eines viskosen (bis flüssigen) Klebstoffes den Vorteil, dass dieser in ein gegebenenfalls vorhandenes (Akustik-)Vlies eintreten kann, welches sich auf der Haltefläche befindet. Auf diese Weise können einerseits Wärmeleiteigenschaften des Vlies (an einer akustisch ohnehin inaktiven Stelle) verbessert werden und/oder es kann die Anbringung des Vliesstoffes an der Haltefläche verbessert werden (nämlich durch die zusätzliche Verklebung des durch das Vlies hindurchtretenden Klebers).

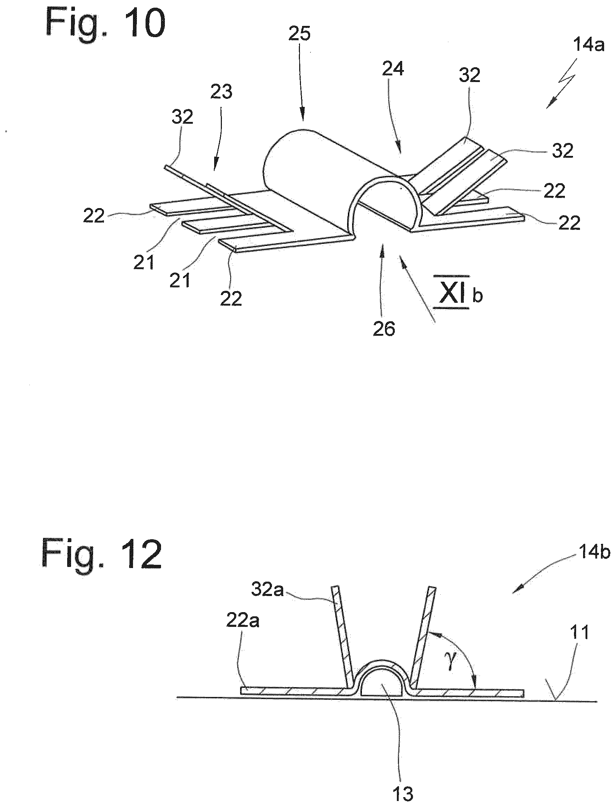

Fig. 10 zeigt dann einen Abschnitt des bevorzugsten Ausführungsbeispiels eines erfindungsgemäßen Wärmeleitbleches 14a in einer sehr schematischen Schrägaufsicht.

Dieses Ausführungsbeispiel entspricht überwiegend demjenigen gemäß den Figuren 3 bis 8, weist also gleichfalls einen Zentralabschnitt 25 mit einer Sicke 26 auf und ebenfalls, im Bereich der Seitenabschnitte 23 und 24, Perforationen 21, welche einerseits neben sich Zungen 22 aufweisen oder ausbilden und andererseits als nach außen offene Randausnehmungen ausgebildet sind.

Der große Unterschied des Wärmeleitbleches 14a im Gegensatz zu den Wärmeleitblechen gemäß den Figuren 1 bis 8 besteht nun aber gerade darin, wie die Perforationen 21 nach Art von offenen Randausnehmungen hier ausgebildet werden:
So lässt Fig. 10 erkennen, dass ein spanloses Herstellungsverfahren Verwendung findet, in welchem die Perforationen 21 nicht einfach durch Materialentfernung herausgestanzt werden. Vielmehr wird das Blech zu deren Herstellung seitlich eingeschnitten und die dadurch entstehenden Zwischenzungen 32 (welche die Kontur der Perforationen 21 aufweisen) werden anschließend (in einem Winkel) hochgestellt, beispielsweise abgeknickt, abgekantet oder ähnliches.

Eine derartige Ausgestaltung ergibt eine Verbesserung des Wärmetauscherverhaltens, insbesondere wenn es sich um ein System handelt, welchem oberhalb der Blechebene Luft zugeführt wird.

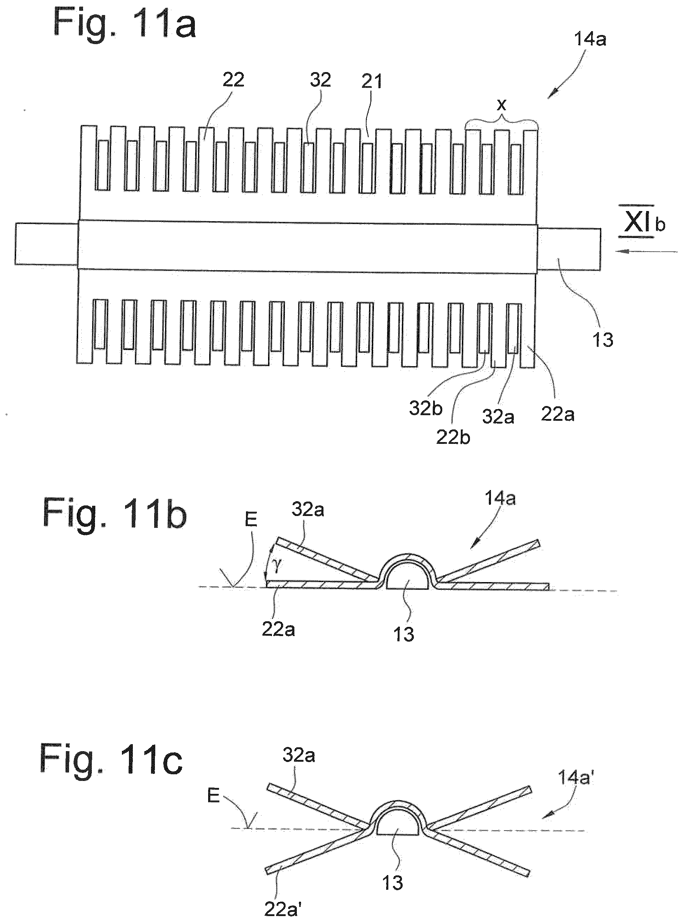

Fig. 11a zeigt dann eine Unteransicht des vollständigen Wärmeleitbleches 14a unter Darstellung des Rohrabschnittes 13 (während Fig. 10 nur einen Abschnitt, insbesondere gemäß einer in Fig. 11a mit X gekennzeichneten Breitenerstreckung darstellt).

Auch die Unteransicht gemäß Fig. 11a lässt dabei die alternierende Anordnung von Finger 22 und (hochgestellten) Zwischenfinger 32 erkennen. Durch das Hochstellen der Finger 32 (bezüglich Fig. 11a also zur anderen Seite der Figurenebene hin, von dem Betrachter weg) entstehen Perforationen 21 nach Art von seitlichen Randausnehmungen gemäß der Figuren 1 bis 8 (welche in Fig. 11a aus Gründen der Ansicht natürlich nicht so gut erkennbar sind wie beispielsweise in Fig. 10).

Bei dem Ausführungsbeispiel gemäß Fig. 11a wechseln sich Finger und (hochgestellte) Zwischenfinger kontinuierlich und/oder durchgehend ab. Sie erstrecken sich entlang der gesamten Längserstreckung des Wärmeleitbleches 14a.

Fig. 11b zeigt dann eine Art Schnittansicht, wobei es sich wohl eher um eine Frontalansicht, etwa gemäß Ansichtspfeil XIb in Fig. 11a handelt: So lässt Fig. 11b besonders gut erkennen, dass sich zwischen der Finger 22a und der hochgestellten Zwischenfinger 32a (welche in einer reinen Schnittansicht natürlich nicht sichtbar wäre), jedenfalls in der Seitenansicht, ein Hochstellwinkel γ ergibt. Dieser Hochstellwinkel γ liegt insbesondere zwischen 1° und 180°, beträgt im vorliegenden Fall exemplarisch etwa 20°.

Fig. 11b lässt dabei erkennen, dass das Wärmeleitblech 14a im Wesentlichen achssymmetrisch ausgebildet ist, dass sich mithin in Axialerstreckungsrichtung des Wärmeleitbleches 14a stets ein Paar Finger 22 und (hochgestellte) Zwischenfinger 32 abwechseln.

Die Zwischenfinger 32 eines Paares weisen dabei vorzugsweise einen (achssymmetrisch gespiegelten) identischen Hochstellwinkel γ auf.

Fig. 11c zeigt dann, dass auch bei diesem Ausführungsbeispiel das Wärmeleitblech 14a', analog zu den Ausführungsbeispielen gemäß den Figuren 6c bzw. 7c, angestellte Seitenabschnitte 23, 24 bzw. Finger 22 aufweisen kann, welche beim späteren Anbringen an eine Haltefläche eine gewisse Vorspannung des Wärmeleitbleches 14a' gegen die Haltefläche bewirken können, was zu einer besonders guten Wärmeübertragung führen kann, da eine sichere und satte Anbringung der Zungen 22a' an der Haltefläche ermöglich wird.

Abschließend sei darauf hingewiesen, dass in Fig. 11b und 11c noch die Haupterstreckungsebene E des Wärmeleitbleches gestrichelt angedeutet ist, wobei es sich mithin um die Blechebene handelt, aus welcher das Wärmeleitblech in seiner Rohlingsfassung typischerweise herausgearbeitet wird.

Eine solche Haltefläche 11 zeigt dann exemplarisch noch einmal die Fig. 12, bei welcher die Finger 22 entweder gemäß Fig. 11b nicht oder gemäß Fig. 11c doch entsprechend vorgespannt sein können (dies ist im späteren Montagezustand typischerweise nicht mehr unterscheidbar).

Der Unterschied zwischen Fig. 12 und Fig. 11 besteht im Wesentlichen darin, dass diese verdeutlichen soll, dass auch ein wesentlich größerer Anstellwinkel γ von über 45°, insbesondere von über 70°, beispielsweise von zwischen 70° und 100° (im vorliegenden Fall von exemplarisch etwa 80°) gewählt werden kann, wobei eine derartige Ausgestaltung sogar, jedenfalls zum Zeitpunkt der Anmeldung der vorliegenden Patentanmeldung, von der Anmelderin bevorzugt wird, da entsprechende thermische Tests besonders vielversprechend waren.

## Patentansprüche

1. Wärmeleitblech (14, 14', 14a, 14b, 14a') zur Festlegung eines Rohrabschnittes (13) an einer Haltefläche (11, 17) eines Wärmetauschers (10), wobei das Wärmeleitblech (14, 14'), insbesondere aus akustischen Gründen, Perforationen (21, 21') aufweist, wobei die Perforationen (21), unter der Ausbildung von Fingern (22) des Wärmeleitblechs (14a, 14a', 14b), als nach außen offene Randausnehmungen ausgebildet sind, **dadurch gekennzeichnet, dass** oberhalb der Ausnehmungen (21) hochgestellte Zwischenfinger (32) des Wärmeleitblechs (14a, 14a', 14b) angeordnet sind.

2. Wärmeleitblech (14, 14', 14a, 14b, 14a') nach Anspruch 1, **dadurch gekennzeichnet, dass** das Wärmeleitblech (14, 14') einen, vorzugsweise mit einer Sicke (26) versehenen, Zentralabschnitt (25) aufweist, insbesondere zum Zusammenwirken mit dem Rohrabschnitt (31), und mindestens einen Seitenabschnitt (23, 24), insbesondere zur Anlage an der Haltefläche (11, 17).

3. Wärmeleitblech (14, 14', 14a, 14b, 14a') nach Anspruch 2, **dadurch gekennzeichnet, dass** der Seitenabschnitt (23, 24), pro Flächeneinheit, mehr Perforationen (21, 21') aufweist als der Zentralabschnitt (25).

4. Wärmeleitblech (14, 14', 14a, 14b, 14a') nach Anspruch 2 oder 3, **dadurch gekennzeichnet, dass** die Perforationen (21, 21') im Wesentlichen, insbesondere vollständig, in dem oder den Seitenbereich(en) (23, 24) ausgebildet sind.

5. Wärmeleitblech (14, 14', 14a, 14b, 14a') nach einem der voranstehenden Ansprüche, **dadurch gekennzeichnet, dass** die Perforationen (21, 21') innerhalb einer, insbesondere von Geraden (G₁, G₂) gebildeten, Hüllkontur des Wärmeleitbleches (14, 14') angeordnet sind.

6. Wärmeleitblech (14, 14', 14a, 14b, 14a') nach einem der voranstehenden Ansprüche, **dadurch gekennzeichnet, dass** die Perforationen (21) vollständig als nach außen offene Randausnehmungen ausgebildet sind.

7. Wärmeleitblech (14, 14', 14a, 14a', 14b) nach einem der voranstehenden Ansprüche, **dadurch gekennzeichnet, dass** das Wärmeleitblech (14) Haltemittel (28), insbesondere ein doppelseitiges Klebeband, zum Anbringen des Wärmeleitbleches (14, 14') an der Haltefläche (11, 17) aufweist, welche insbesondere ausschließlich in einem Bereich des Wärmeleitbleches (14, 14', 14a, 14a', 14b) angeordnet sind, in dem keine Perforationen (21, 21') vorgesehen sind.

8. Wärmeleitblech (14a, 14a', 14b) nach einem der voranstehenden Ansprüche, **dadurch gekennzeichnet, dass** die Zwischenfinger (32) die Form der Ausnehmungen (21) aufweisen.

9. Wärmeleitblech (14a, 14a', 14b) nach Anspruch 8, **dadurch gekennzeichnet, dass** die die Zwischenfinger (32) in einem Hochstellwinkel (γ) von der Haupterstreckungsebene (E) des Wärmeleitblechs (14a, 14a', 14b) und/oder der Haltefläche (11, 17) und/oder den Fingern (21) abstehen, wobei die Finger (21) insbesondere in der Haupterstreckungsebene (E) des Wärmeleitblechs (14a, 14a', 14b) und/oder parallel zur Haltefläche (11, 17) angeordnet sind.

10. Wärmeleitblech (14a, 14a', 14b) nach Anspruch 9, **dadurch gekennzeichnet, dass** der Hochstellwinkel zwischen 1° und 180° beträgt, vorzugsweise zwischen 25° und 100°, weiter vorzugsweise zwischen 60° und 90°.

11. Wärmetauscher (10), insbesondere Flächenwärmetauscher, umfassend ein Wärmeleitblech (14, 14', 14a, 14a', 14b) nach einem der voranstehenden Ansprüche, welches einen Rohrabschnitt (13) an einer Haltefläche (11, 17) des Wärmetauschers (10) festlegt.

12. Verfahren zur Herstellung eines Wärmeleitbleches (14, 14', 14a, 14a', 14b) zur Festlegung eines Rohrabschnittes (13) an einer Haltefläche (11, 17) eines Wärmetauschers (10), wobei, insbesondere zur Ausbildung randseitiger Finger (22), nach außen offene Randausnehmungen (21) an dem Wärmeleitblech (14, 14', 14a, 14a', 14b) ausgebildet, vorzugsweise ausgestanzt oder ausgenibbelt, werden, **dadurch gekennzeichnet, dass** die nach außen offenen Randausnehmungen (21) ausgebildet werden, indem Zwischenfinger (32) mit der Kontur der Randausnehmungen (21) an dem Wärmeleitblech (14a, 14a', 14b) erzeugt und nach oben abgeknickt werden.

13. Verfahren nach Anspruch 12, **dadurch gekennzeichnet, dass** eine Sicke (26) in das, vorzugsweise ansonsten noch flache, Wärmeleitblech (14, 14', 14a, 14a', 14b) gearbeitet, insbesondere geprägt, wird und/oder zwei Seitenabschnitte (23, 24) in einem Anstellwinkel (α) zueinander ausgebildet werden.

14. Verfahren nach Anspruch 12 oder 13, **dadurch gekennzeichnet, dass** die Zwischenfinger (32) in einem Hochstellwinkel (γ) von zwischen 1° und 180°, vorzugsweise von zwischen 60° und 90°, nach oben abgeknickt werden.

## Claims

1. Heat conducting plate (14, 14' 14a, 14b, 14a') for fixing a pipe section (13) to a holding surface (11, 17) of a heat exchanger (10), wherein the heat conducting plate (14, 14') has perforations (21, 21'), in particular for acoustic reasons, wherein the perforations (21), with the formation of fingers (22) of the heat conducting plate (14a, 14a', 14b), are designed as outwardly open edge recesses, **characterised in that** raised intermediate fingers (32) of the heat-conducting plate (14a, 14a', 14b ) are arranged above the recesses (21).

2. Heat conducting plate (14, 14' 14a, 14b, 14a') according to claim 1, **characterised in that** the heat conducting plate (14, 14') has a central section (25), preferably provided with a corrugation (26), in particular for co-operation with the pipe section (31), and at least one side section (23, 24), in particular for abutting the holding surface (11, 17).

3. Heat conducting plate (14, 14' 14a, 14b, 14a') according to claim 2, **characterised in that** the side section (23, 24) has more perforations (21, 21') per unit area than the central section (25).

4. Heat conducting plate (14, 14' 14a, 14b, 14a') according to claim 2 or 3, **characterised in that** the perforations (21, 21') are formed substantially, in particular completely, in the side region(s) (23, 24).

5. Heat conducting plate (14, 14' 14a, 14b, 14a') according to one of the preceding claims, **characterised in that** the perforations (21, 21') are arranged within an envelope contour, in particular formed by straight lines (G1, G2), of the heat conducting plate (14, 14').

6. Heat conducting plate (14, 14' 14a, 14b, 14a') according to one of the preceding claims, **characterised in that** the perforations (21) are completely formed as outwardly open edge recesses.

7. Heat conducting plate (14, 14', 14a, 14a', 14b) according to one of the preceding claims, **characterised in that** the heat conducting plate (14) has holding means (28), in particular a double-sided adhesive tape, for attaching the heat conducting plate (14, 14') to the holding surface (11, 17), which means are arranged in particular exclusively in a region of the heat conducting plate (14, 14', 14a, 14a', 14b), in which no perforations (21, 21') are provided.

8. Heat conducting plate (14a, 14a', 14b) according to one of the preceding claims, **characterised in that** the intermediate fingers (32) have a shape of the recesses (21).

9. Heat-conducting plate (14a, 14a', 14b) according to claim 8, chararcterised in that the intermediate fingers (32) protrude at an elevation angle (γ) from the main plane of extension (E) of the heat conducting plate (14a, 14a', 14b) and/or from the holding surface (11, 17) and/or from the fingers (22), wherein the fingers (22) are arranged in particular in the main plane of extension (E) of the heat conducting plate (14a, 14a', 14b) and/or parallel to the holding surface (11, 17).

10. Heat conducting plate (14a, 14a', 14b) according to claim 9, **characterised in that** the elevation angle is between 1° and 180°, preferably between 25° and 100°, more preferably between 60° and 90°.

11. Heat exchanger (10), in particular surface heat exchanger, comprising a heat conducting plate (14, 14', 14a, 14a', 14b) according to one of the preceding claims, which fixes a pipe section (13) to a holding surface (11, 17) of the heat exchanger (10).

12. Method of manufacturing a heat conducting plate (14, 14', 14a, 14a', 14b) for fixing a pipe section (13) to a holding surface (11, 17) of a heat exchanger (10), wherein, in particular for creating bordering fingers (22), outwardly edge recesses (21) are formed, preferably punched out or nibbled out, on the heat conducting plate (14, 14', 14a, 14a', 14b), **characterised in that** the outwardly open edge recesses (21) are formed by creating intermediate fingers (32), having the contour of the edge recesses (21), on the heat conduction plate (14a, 14a', 14b) and bending them upwards.

13. Method according to claim 12, **characterised in that** a corrugation (26) is worked, in particular embossed, into the, preferably otherwise still flat, heat conducting plate (14, 14', 14a, 14a', 14b) and/or that two side sections (23, 24) are formed at an angle (α) to each other.

14. Method according to claim 12 or 13, **characterized in that** the intermediate fingers (32) are bent upwards at an elevation angle (γ) of between 1° and 180°, preferably of between 60° and 90°.

## Revendications

1. Déflecteur de chaleur (14, 14', 14a, 14b, 14a') destiné à fixer une section de tuyau (13) sur une surface de retenue (11, 17) d'un échangeur de chaleur (10), dans lequel le déflecteur de chaleur (14, 14') présente des perforations (21, 21'), en particulier pour des raisons acoustiques, dans lequel les perforations (21) sont configurées sous la forme d'évidements de bords ouverts vers l'extérieur en configurant des doigts (22) du déflecteur de chaleur (14a, 14a', 14b), **caractérisé en ce que**, au-dessus des évidements (21), sont disposés des doigts intermédiaires (32) du déflecteur de chaleur (14a, 14a', 14b) qui sont situés en hauteur.

2. Déflecteur de chaleur (14, 14', 14a, 14b, 14a') selon la revendication 1, **caractérisé en ce que** le déflecteur de chaleur (14, 14') présente une section centrale (25), de préférence munie d'un bourrelet (26), en particulier pour coopérer avec la section de tuyau (31), et au moins une section latérale (23, 24), en particulier pour l'installation sur la surface de retenue (11, 17).

3. Déflecteur de chaleur (14, 14', 14a, 14b, 14a') selon la revendication 2, **caractérisé en ce que** la section latérale (23, 24) présente, par unité de surface, plus de perforations (21, 21') que la section centrale (25).

4. Déflecteur de chaleur (14, 14', 14a, 14b, 14a') selon la revendication 2 ou 3, **caractérisé en ce que** les perforations (21, 21') sont configurées sensiblement, en particulier complètement, dans la ou les zone(s) latérales (23, 24).

5. Déflecteur de chaleur (14, 14', 14a, 14b, 14a') selon une des revendications précédentes, **caractérisé en ce que** les perforations (21, 21') sont disposées à l'intérieur d'un contour d'enveloppe du déflecteur de chaleur (14, 14'), qui est en particulier formé par des lignes droites (G₁, G₂).

6. Déflecteur de chaleur (14, 14', 14a, 14b, 14a') selon une des revendications précédentes, **caractérisé en ce que** les perforations (21) sont configurées complètement sous la forme d'évidements de bords ouverts vers l'extérieur.

7. Déflecteur de chaleur (14, 14', 14a, 14a', 14b) selon une des revendications précédentes, **caractérisé en ce que** le déflecteur de chaleur (14) présente des moyens de retenue (28), en particulier un ruban adhésif double face, pour appliquer le déflecteur de chaleur (14, 14') sur la surface de retenue (11, 17), lesquels sont disposés en particulier exclusivement dans une région du déflecteur de chaleur (14, 14', 14a, 14a', 14b) où aucune perforation (21, 21') n'est prévue.

8. Déflecteur de chaleur (14a, 14a', 14b) selon une des revendications précédentes, **caractérisé en ce que** les doigts intermédiaires (32) présentent la forme des évidements (21).

9. Déflecteur de chaleur (14a, 14a', 14b) selon la revendication 8, **caractérisé en ce que** les doigts intermédiaires (32) font saillie du plan d'extension principal (E) du déflecteur de chaleur (14a, 14a', 14b) et/ou de la surface de retenue (11, 17) et/ou des doigts (21) à un angle situé en hauteur (γ), dans lequel les doigts (21) sont disposés en particulier dans le plan d'extension principal (E) du déflecteur de chaleur (14a, 14a', 14b) et/ou parallèlement à la surface de retenue (11, 17).

10. Déflecteur de chaleur (14a, 14a', 14b) selon la revendication 9, **caractérisé en ce que** l'angle situé en hauteur est compris entre 1° et 180°, de préférence entre 25° et 100°, plus préférablement entre 60° et 90°.

11. Échangeur de chaleur (10), en particulier échangeur de chaleur de surface, comprenant un déflecteur de chaleur (14, 14', 14a, 14a', 14b) selon une des revendications précédentes, qui fixe une section de tuyau (13) sur une surface de retenue (11, 17) de l'échangeur de chaleur (10).

12. Procédé destiné à fabriquer un déflecteur de chaleur (14, 14', 14a, 14a', 14b) pour fixer une section de tuyau (13) sur une surface de retenue (11, 17) d'un échangeur de chaleur (10), dans lequel en particulier pour configurer des doigts en bordure (22), des évidements de bords (21) ouverts vers l'extérieur sont configurés, de préférence découpés ou grignotés, sur le déflecteur de chaleur (14, 14', 14a, 14a', 14b), **caractérisé en ce que** les évidements de bords ouverts vers l'extérieur (21) sont configurés en produisant, puis en recourbant vers le haut, des doigts intermédiaires (32) avec le contour des évidements de bords (21) sur le déflecteur de chaleur (14a, 14a', 14b).

13. Procédé selon la revendication 12, **caractérisé en ce qu'**un bourrelet (26) est usiné, en particulier gaufré, dans le déflecteur de chaleur (14, 14', 14a, 14a', 14b) de préférence au demeurant encore plat et/ou deux sections latérales (23, 24) sont configurées selon un angle d'incidence (α) l'une par rapport à l'autre.

14. Procédé selon la revendication 12 ou 13, **caractérisé en ce que** les doigts intermédiaires (32) sont recourbés vers le haut à un angle situé en hauteur (γ) compris entre 1° et 180°, de préférence entre 60° et 90°.
